Europäisches Patentamt

European Patent Office

Office européen des brevets

(11) Publication number: **0 362 166**
**A2**

## EUROPEAN PATENT APPLICATION

(21) Application number: 89850240.6

(51) Int. Cl.5: **F16K 31/363**

(22) Date of filing: 02.08.89

(30) Priority: 27.09.88 SE 8803419

(43) Date of publication of application:
04.04.90 Bulletin 90/14

(84) Designated Contracting States:
AT BE CH DE FR GB LI NL

(71) Applicant: GCE GAS CONTROL EQUIPMENT
AB
Box 21044
S-200 21 Malmö(SE)

(72) Inventor: Kihlberg, Yngve
Ingelstadsvägen 47
S-232 02 Akarp(SE)
Inventor: Olsson, Mats
Arkitektvägen 6
S-245 00 Staffanstorp(SE)

(74) Representative: Karlzén, Bengt Erik
AGA AB Patent Department
S-181 81 Lidingö(SE)

(54) Improvement to gas regulator.

(57) The disclosure relates to an arrangement in a gas regulator for reducing the variation of the outlet pressure in relation to the inlet pressure on reducing inlet pressure, the regulator comprising a diaphragm (21) and first spring means (24) acting thereon. Centrally in the diaphragm, there is disposed a pressure member (27) intended to act on a spindle device (28, 31), which co-operates with a movable valve insert which abuts against a valve seat (31), and second spring means (30) acting thereon. The outlet of a valve housing (1) is disposed at the inlet of the gas regulator, the valve housing having a cylindrical core-out in which is disposed an axially displaceable piston (2) sealing against the walls of the core-out, the end surface (A2) of the piston facing towards the regulator inlet being larger than the end surface (A1) facing the inlet of the valve housing. This latter end surface is designed as a cone (10) disposed to abut against a seat (11) provided in the core-out. Valve housing and piston are provided with channels (8, 9, 13, 14) for gas passage from the inlet of the valve housing through the seat and piston to the outlet (16) of the valve housing. A spring means (4) is disposed between recesses in the piston and in the core-out and is operative to displace the piston towards the outlet of the valve housing.

Fig.1

## IMPROVEMENTS TO GAS REGULATORS

### TECHNICAL FIELD

The present invention relates to an arrangement in a gas regulator for reducing the variation of the outlet pressure in relation to the inlet pressure when inlet pressure is reduced, the regulator comprising a diaphragm and first spring means acting thereon, there being disposed centrally in the diaphragm a pressure member intended to act on a spindle which cooperates with a movable valve insert abutting against a valve seat, and second spring means acting thereon.

### BACKGROUND ART

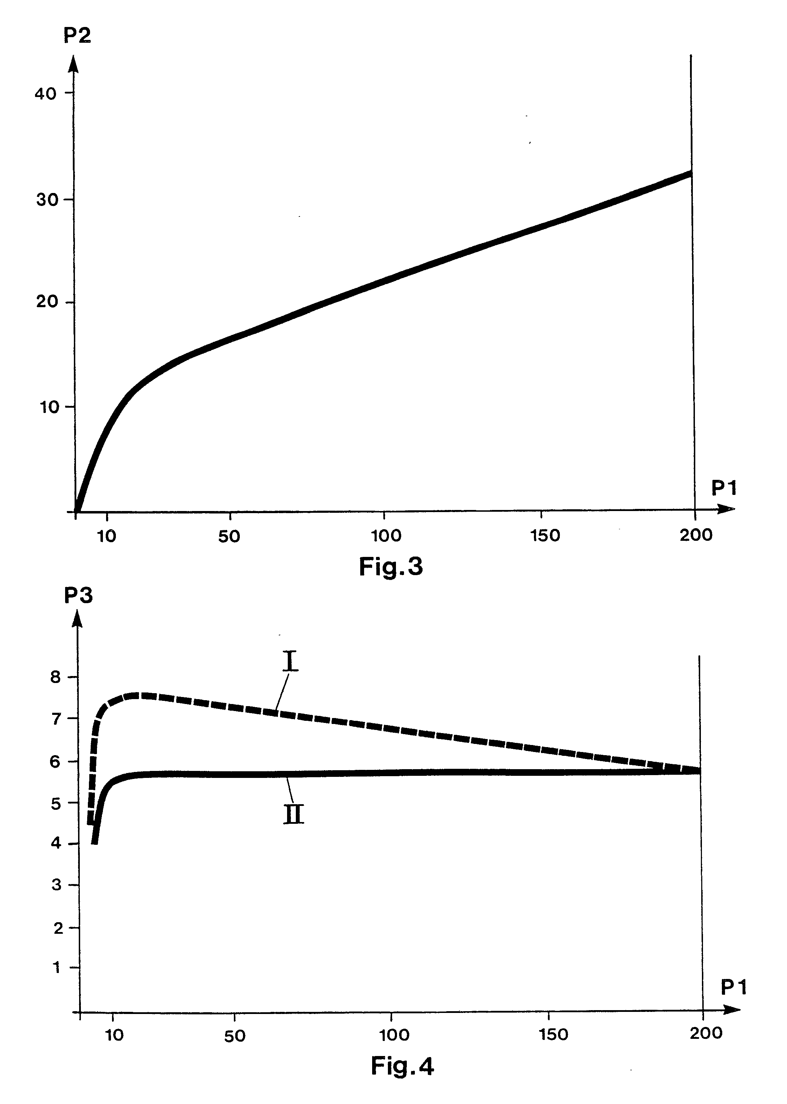

In, for instance, a counter-flow regulator, i.e. the valve device in the regulator opens in a direction counter to the gas flow, the outlet pressure displays a rising characteristic. During emptying of a gas cylinder with a predetermined volume per unit of time, the pressure will decrease. The gas pressure may then vary from, for example, 200 bar to 10 bar. If such a cylinder is connected to, for instance, a so-called diaphragm regulator, the inlet pressure to the regulator will thus fall as discharging of gas proceeds. During this reduction of the inlet pressure, the outlet pressure will increase in accordance with a rising curve, as shown by curve I in Fig. 4. In many cases, this is a property whose effect is appropriately to be eliminated or at any rate reduced. This is particularly desirable when the regulator is connected to an apparatus which is intended to operate at a set gas pressure.

### OBJECTS OF THE INVENTION

The object of the present invention is therefore to devise such an arrangement in a gas regulator that a substantially stable outlet pressure is obtained from the regulator irrespective of variations in the inlet pressure of the regulator. The invention is thus essentially characterized in that the outlet of a valve housing is disposed at the inlet of the gas regulator, the valve housing being provided with a cylindrical core-out in which there is disposed an axially displaceable piston which seals against the walls of the core-out and whose end surface facing the regulator inlet is larger than the end surface facing the inlet of the valve housing, this latter end surface being designed as a cone disposed to abut against a seat provided in the core-out, both valve housing and piston being provided with channels for gas passage from the inlet of the valve housing through the seat and piston and to the outlet of the valve housing, and a spring means being disposed between recesses in the piston and in the core-out, the spring means being operative to displace the piston towards the outlet of the valve housing.

The invention is further characterized in that the piston is, in its portion facing towards the outlet of the valve housing, provided with an axial gas channel and, in its portion designed as a cone, is provided with radial channels which discharge into the above-mentioned axial gas channel, the piston in the cone-shaped portion being of smaller diameter so that a chamber for the gas is formed between the piston and the core-out, in which chamber the above-mentioned radial channels discharge. Further characterizing features according to the present invention are that there are disposed, in the gas channel between the seat and the inlet of the valve housing, a filter and a damping washer for the incoming gas; and that the channel between the damping washer and the valve housing inlet is divided into a number of channels directed towards the periphery of the washer.

### BRIEF DESCRIPTION OF THE ACCOMPANYING DRAWINGS

The nature of the present invention and its aspects will be more readily understood from the following brief description of the accompanying Drawings and discussion relating thereto.

In the accompanying Drawings:

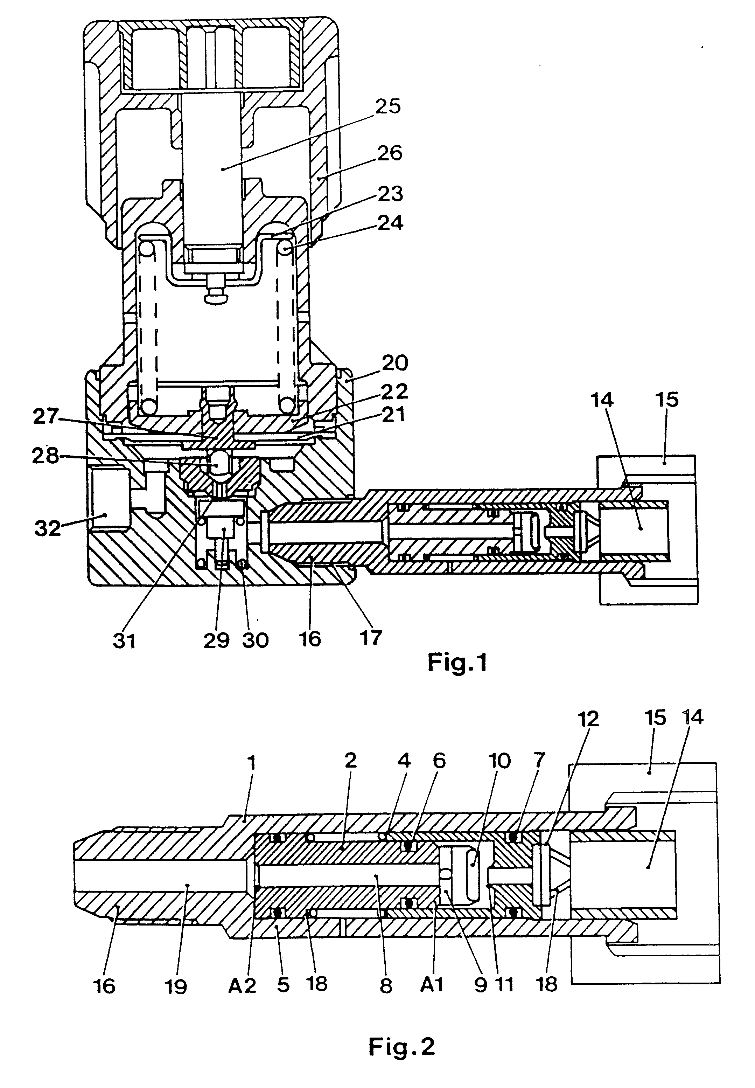

Fig. 1 illustrates a conventional so-called diaphragm regulator to whose inlet an arrangement according to the present invention has been connected;

Fig. 2 shows this arrangement on a larger scale;

Fig. 3 shows the pressure after the auxiliary arrangement on emptying of a gas cylinder; and

Fig. 4 shows the outlet pressure from the regulator as a function of the cylinder pressure, without and with the arrangement according to the present invention.

### DESCRIPTION OF PREFERRED EMBODIMENT

Referring to the Drawings, the conventional regulator comprises a housing 20 in which a diaphragm 21 is placed under tension. A diaphragm washer 22 abuts against this diaphragm. Between the washer 22 and a bracket 23, a spring 24 is placed under tension. The spring fixing may be adjusted by means of an adjustment screw 25, which in turn is turned by means of a knob 26. By turning the knob 26, the force applied by the regulator spring against the diaphragm may be varied. On the opposite side of the diaphragm, there is disposed a device 27 against which abuts a valve spindle 28. The valve spindle 28 may be actuated by an axially displaceable cone 29 which, by means of a valve spring 30, is urged against a seat 31. The cavity in the regulator housing 20 in which the cone 29 is disposed is in communication with the inlet of the regulator. The space beneath the diaphragm 21 is in communication with the outlet 32 of the regulator.

A valve housing 1 provided with a threaded pin 16 is screwed into the inlet of the regulator housing 20, this inlet being provided with threads 17. This member is designed with axial through-holes so that the gas may flow from the inlet 14 of the valve housing through the valve housing and to the inlet of the regulator. The valve housing has an outlet channel 19 which is in communication with a cylindrical core-out in which there is disposed an axially displaceable piston 2. The piston is sealed against the walls of the valve housing by sealing rings 5 and 6 which are disposed in grooves in the piston. Between one recess 4 in the valve housing and one recess 18 in the piston there is provided a spring means 4 which urges the piston towards the outlet channel 19 of the valve housing. The end of the piston facing towards the inlet channel is designed as a cone provided with a sealing stud 10 which is arranged to co-operate with a seat 11 disposed in the valve housing. In the portion designed as a cone, the piston is of smaller diameter so that a circular gas chamber is formed between the piston and the cylinder wall. In this part of the cylinder, it is provided with radial channels 9 which connect the cylindrical chamber with an axial chamber 8 disposed in the other part of the piston.

In the channel between the seat 11 and the inlet of the valve housing, there are disposed a filter and a damping washer 12 for the incoming gas. The connection between the damping washer and the inlet channel 14 consists of a number of obliquely inclined channels which discharge in the periphery of the damping washer. The inlet of the valve housing is also provided with a number of connecting devices 15 for a gas conduit.

The auxiliary device which the valve housing with its contents comprises functions as follows. The incoming gas from the inlet passes the obliquely inclined channels in the damping washer and through the filter. By this means, the pressure shock which occurs when the gas is turned on will be prevented from directly impinging upon the sealing stud 10 on the cone portion of the piston. The gas which flows out through the seat 11 passes through the chamber between the piston and the valve housing wall, through the radial channels 9 into the axial channel 19 and thence into the inlet of the diaphragm regulator. The gas pressure in the inlet of the valve housing is designated P1 and the gas pressure at the outlet of the valve housing is designated P2. The end surface on the end of the piston facing the outlet has been given the surface area designation A2 and the end of the piston facing the inlet has been given the surface area designation A1, A2 thus being larger than A1. The pressure P2 x the area A2 now constitutes a force which displaces the piston towards the inlet end of the valve housing. The pressure P2 will, at this point, be reduced. The spring force F from the spring 4 and that force constituted by the pressure P1 x the area A1 act on the piston in the opposite direction. The piston then assumes a position of equilibrium where $P2 \times A2 \approx P1 \times A1 + F$. As a result of the spring force in the absence of gas pressure, the piston is displaced towards the outlet end, the valve housing being open from the inlet side to the outlet side. This is to ensure reliable function.

The gas thus flows at reduced pressure P2 into the inlet of the diaphragm regulator. The regulator operates in a per se known manner. A gas flow will now be obtained from the regulator at a substantially constant working pressure throughout the entire time during which the gas cylinder is being emptied. The outlet pressure P3 in the outlet of the regulator as a function of the inlet pressure P1 to the auxiliary device is shown in Fig. 4, curve II. From the above equilibrium equation, the slope of the curve P2 as a function of P1 can be derived to $\Delta P2/\Delta P1 = A1/A2$. In the diaphragm regulator, the following equilibrium equation applies:
$F + A \times 1 + P3 \times a \approx f + P3 \times A + P2 \times a$, in which
F is the force from the regulator spring 24
A is the diaphragm surface area and 1 is equal to the atmospheric pressure
P3 is the outlet pressure and a is the seat surface area
f is the force from the spring 30
P2 is the inlet pressure to the regulator
From this equation, the slope $\Delta P3/\Delta P2$ on the curve P3 as a function from P2 can be derived
$\Delta P3/\Delta P2 = a/(a-A)$
$\Delta P2$ is as previously $= A1/A2 \Delta P1$
Here, $\Delta P3/\Delta P1 \approx a/(a-A) \cdot A1/A2$

Thus, the slope of the curve will reduce by the factor A1/A2. The difference between the slope of the curve P3 as a function of P1 is shown in Fig. 4, where curve 1 shows the characteristic of the regulator without the auxiliary device, and where curve II shows the characteristic of the regulator with the auxiliary device. By connecting to the inlet of the regulator the auxiliary device according to the present invention, the diaphragm regulator will operate as a two-step regulator, by which means it is possible considerably to reduce the outlet pressure change in response to the inlet pressure reduction. A substantially stable outlet pressure from the regulator will thus have been obtained.

As a result of the arrangement described in the foregoing, a possibility has been created for ready modification of an existing conventional regulator into a two-step regulator. No actual modifications to the regulator proper are necessary. The only measure which need be adopted is to remove the existing connection device to the inlet of the regulator and replace this with an arrangement according to the invention. The outer configuration and dimensions of the arrangement agree, in the illustrated embodiment, with those of the connection device. This arrangement, which has proved to be highly reliable, is easy and economical to manufacture and, moreover, simple to use.

## Claims

1. In a gas regulator, an arrangement for reducing the variation of the outlet pressure in relation to the inlet pressure on reducing inlet pressure, the regulator comprising a diaphragm (21) and first spring means (24) acting thereon, there being disposed centrally in the diaphragm a pressure member (27) intended tn act on a spindle device (28, 31) which co-operates with a movable valve insert abutting against a valve seat (31), and second spring means (30) acting thereon, **characterized in that** the outlet of a valve housing (1) is disposed at the inlet of the gas regulator, said valve housing having a cylindrical core-out in which there is disposed an axially displaceable piston (2) sealing against the walls of the core-out and whose end surface (A2) facing the regulator inlet is larger than the end surface (A1) facing the inlet of the valve housing, said latter end surface being designed as a cone (10) arranged to abut against a seat (11) disposed in the core-out, the valve housing and piston being provided with channels (8, 9, 13, 14) for gas passage from the inlet of the valve housing through the seat and piston to the outlet (16) of the valve housing, and spring means (4) being disposed between recesses in the piston and in the core-out, said spring means being operative to displace the piston towards the outlet of the valve housing.

2. The arrangement as claimed in Claim 1, **characterized in that** the piston is, in its portion facing the outlet of the valve housing, provided with an axial gas channel, and is, in its portion designed with a cone, provided with radial channels (9) which discharge into said axial gas channel (8), the piston in the cone-formed portion being of smaller diameter so that a chamber for the gas is formed between piston and core-out, in which chamber said radial channels discharge.

3. The arrangement as claimed in Claim 1, **characterized in that** there are disposed, in the gas channel, between the seat and the inlet of the valve housing, a filter and a damping washer (12) for the incoming gas.

4. The arrangement as claimed in Claim 3, **characterized in that** the damping washer includes a number of obliquely inclined channels (13) directed from the valve housing inlet (14) towards the periphery of the washer.

**Fig.1**

**Fig.2**

Fig.3

Fig.4